## Europäisches Patentamt
## European Patent Office
## Office européen des brevets

(19)

(11) Veröffentlichungsnummer : **0 145 848**
**B1**

(12) **EUROPÄISCHE PATENTSCHRIFT**

(45) Veröffentlichungstag der Patentschrift :
13.12.89

(51) Int. Cl.⁴ : **G 05 G   5/02**

(21) Anmeldenummer : 84110497.9

(22) Anmeldetag : 04.09.84

(54) Wählrastierung in einer Gangschalteinrichtung.

(30) Priorität : 13.09.83 PCT/LU83/00239

(43) Veröffentlichungstag der Anmeldung :
26.06.85 Patentblatt 85/26

(45) Bekanntmachung des Hinweises auf die Patenterteilung : 13.12.89 Patentblatt 89/50

(84) Benannte Vertragsstaaten :
DE FR GB IT SE

(56) Entgegenhaltungen :
DE--A-- 3 000 577
DE--A-- 3 047 117
FR--A-- 2 365 841
GB--A-- 2 037 916

(73) Patentinhaber : ZAHNRADFABRIK   FRIEDRICHSHA-
FEN AKTIENGESELLSCHAFT
Löwentaler Strasse 100 Postfach 2520
D-7990 Friedrichshafen 1 (DE)

(72) Erfinder : Heinzelmann, Karl-Fritz
Finkenstrasse 11
D-7996 Meckenbeuren (DE)

(74) Vertreter : Raue, Reimund
Zahnradfabrik Friedrichshafen AG Löwentaler
Strasse 100 Postfach 2520
D-7990 Friedrichshafen 1 (DE)

Jouve, 18, rue St-Denis, 75001 Paris, France

EP 0 145 848 B1

**Beschreibung**

Diese Erfindung betrifft eine Wählrastierung in einer Gangschalteinrichtung nach dem Oberbegriff von Anspruch 1.

Eine solche Einrichtung ist z. B. aus der DE-PS 30 00 577, Fig. 2, bekannt, wobei Kugelelemente 7 mit einer Steuerkurve 80 zusammenwirken. Solche Einrichtungen arbeiten zuverlässig und ergeben ein über die Wählstellungen sich erstreckendes Rastengebirge, welches dem Fahrer die Gassenauffindung erleichtert. In Verbindung mit einem Fessel-Federpaket wird auch die Drehwelle in vorbestimmten Gassenstellungen gehalten oder in diese zurückgeführt. Infolge der relativ hohen Reibung in der Führung der Kugelelemente ist die Rastenkraft in Wählrichtung nicht nur von Federkräften, sondern auch von Fertigungstoleranzen und der Temperatur abhängig. Eine solche Einrichtung ist auch aufwendig in der Herstellung und damit teuer.

Es ist deshalb Aufgabe der Erfindung, eine Wählrastierung nach dem Oberbegriff von Anspruch 1 in bezug auf Reibung zu optimieren, mit dem Ziel einer leicht gängigen Schaltung, ohne daß die Wirkung der Rastierung sich verschlechtert, dabei soll die Einrichtung einfach gestaltet werden und leicht montierbar sein.

Diese Aufgabe wird mit den kennzeichnenden Merkmalen von Anspruch 1 erfüllt.

Während beim Stand der Technik das Rastierelement radial geführt und von einer Feder immer gegen eine Rastenbahn gedrückt wird, was zu einer relativ hohen Reibung führt, entsteht bei einer Kippbewegung nur eine geringe Reibung, weil der Radius, an dem die Kippbewegung erfolgt, sehr klein gehalten werden kann.

Die Reibung wirkt auch nur bei einer Verstellung, z. B. bei einer Doppel-H-Schaltung von der Gasse 3/4 in die Gasse 5/6 und eventuell noch in die Gasse des Rückwärtsganges. Bei Verstellungen in die Gassen und die Gänge der übrigen Vorwärtsgänge 1/2, 7/8 entsteht sowohl in Schaltals auch in Wählrichtung gar keine Reibung, weil infolge der Fesselung des Rastierelementes in der radial inneren Stellung sich keine Berührung mit dem Grund der Rastenbahn ergibt. Das Prinzip dieser Lösung ermöglicht auch eine sehr einfache und kostengünstige Ausführung bei einer zuverlässigen Rastierung. Darüber hinaus kann auch die Rastierung des Rückwärtsganges mit einbezogen werden, wofür nach dem Stand der Technik DE-PS 30 00 577, Fig. 4, 5, gesonderte Rastierelemente 82 nötig waren.

Mit den Ansprüchen 2 bis 12 wird die Erfindung in vorteilhafter Weise ausgestaltet.

Erfolgt die praktische Ausführung nach den Ansprüchen 2 oder 3 wird neben der Optimierung der Reibung auch ein sehr einfacher Aufbau bei einer günstigen Montage erreicht und der Rastierhebel kann infolge seiner einfachen Gestaltung kostengünstig im Feinstanzverfahren einbaufertig hergestellt werden.

Mit der Lösung nach Anspruch 4 erfolgt eine weitere Vereinfachung, weil die Bolzen nur einseitig im Schaltgehäuse befestigt sind und weil die seitliche Führung des Rastierhebels in einfacher Weise erfolgt, ohne daß ein Schlitz zu dieser Führung in das Schaltgehäuse eingearbeitet werden muß.

Mit der Lösung nach Anspruch 5 wird nicht nur die Reibung weiter verringert, sondern es ist auch möglich, den Rastenring und dessen Befestigung nach Anspruch 10 zu vereinfachen. Bei der Anordnung von mindestens zwei gegenüberliegenden Rastierhebeln nach Anspruch 6 werden, wie bekannt, bei der Überwindung der Rasten keine Lagerreaktionen auf die Drehwellenlager ausgeübt.

Wird die Wirkrichtungsumkehr des Fessel-Federpaketes in die Mitte einer Raste des Rastenringes gelegt und nach Anspruch 7 die Raste mit zwei Wirkfläche ausgeführt, so ergibt sich durch die Anordnung, z. B. der Gassen 3/4 und 5/6 wie bei einer Doppel-H-Schaltung beidseitig dieses Rastringes eine besonders günstige, einfache und auch variable Lösung der Rastierung, da die Gestaltung der Wirkflächen an der Raste, wie auch an der Nase des Rastierhebels, nach der gewollten Wirkung erfolgen kann.

Die Lösungen nach den Ansprüchen 8 bis 12 sind weitere Ausgestaltung mit Vorteilen, die sich besonders in Verbindung mit vorbestimmten Bedingungen einer Gangschaltung ergeben können.

Aus der DE-OS 30 47 117, Fig. 2 und 3 sind zwar reibungsarme Rastkugeln in einer Rastvorrichtung bekannt. In der Führung entsteht aber trotzdem Reibung und die Herstellung solcher Einrichtungen ist teuer und sie sind auch dauernd in Wirkverbindung mit der Rastenbahn.

Aus der GB-A-2 037 916 ist bekannt in einer Anzeigevorrichtung für die Schaltstellung eines Wechselgetriebes mindestens ein Bauteil anzuordnen, das über eine Zugfeder schwenkbar an eine profilierte Anlagefläche angedrückt wird, so daß der Fahrer am Schalthebel die Neutral- und die geschaltete Stellung in einer Gasse erkennen kann. Das Bauteil wird dabei immer an die profilierte Anlagefläche angedrückt, wobei zur Verminderung der Reibung vorrangig eine Anlagerolle vorgesehen ist.

Weitere Einzelheiten der Erfindung werden anhand von einem Ausführungsbeispiel und anhand von Zeichnungen erläutert, wobei die Einzelheiten der Zeichnung Gegenstand der Erfindung sind. Es zeigen:

Fig. 1 einen Ausschnitt der Gangschaltung im Bereich der Wählrastierung und in der Ansicht vom Getriebe aus — Unterseite — mit zwei Darstellungen der Rastenringe,

Fig. 2 eine Querschnitt durch Fig. 1 im Bereich des Rastierhebels,

Fig. 3 ein Längsschnitt nach Fig. 1 in Richtung der Drehwelle,

Fig. 4 den Rastenring einer Doppel-H-Schaltung mit der Stellung der Nase des Rastierhebels in den einzelnen Gassen.

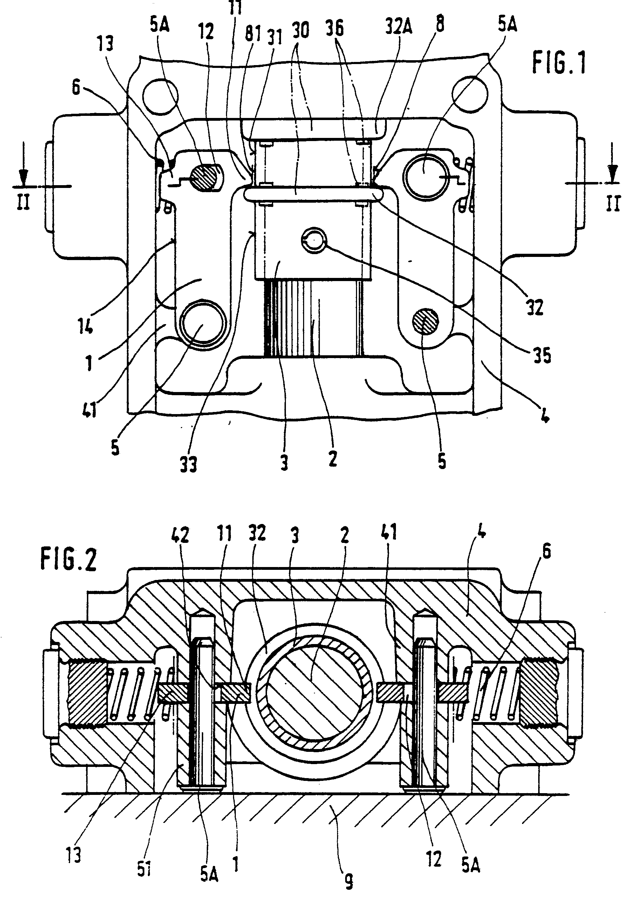

In Fig. 1 ist im Schaltgehäuse 4 eine Drehwelle 2 mit einem Rastenring 3 und Rasten 32, 32A gelagert, wobei der Rastenring über einen Spannbolzen 35 mit der Drehwelle verbunden ist. Alternativ — strichpunktiert und dünn gezeichnet — sind noch über Seeger-Ringe 36 an der Drehwelle 2 befestigte Rastenringe 30 erkennbar. Quer zur Drehwelle 2 und im Abstand dazu sind zwei erste Bolzen 5 an je einem Lagerauge 41 des Schaltgehäuses 4 befestigt und tragen je einen um diese ersten Bolzen 5 radial zur Drehwelle schwenkbare und gegenüberliegende Rastierhebel 1, deren Nasen 11 mit den Rasten 32, 32A oder den Rastenringen 30 zusammenwirken. Diese Rastierhebel werden von je einer Feder 6, die sich am Schaltgehäuse 4 abstützt, in Richtung auf die Drehwelle zu gedrückt und von je einem zweiten Bolzen 5A, der parallel zum ersten und etwa in der Ebene der Feder und der Nase des Rastierhebels in gleicher Weise wie der erste Bolzen am Schaltgehäuse gelagert ist, in Verbindung mit einem Langloch 12 in einer radial inneren Stellung 8 gefesselt. Zwischen der Rastenbahn 31 bzw. der Drehwelle 2 und der radial inneren Stellung 8 des Rastierhebels 1 ergibt sich ein Spalt 81.

In dem Querschnitt — Fig. 2 zu Fig. 1 sind 41 die Lageraugen am Schaltgehäuse 4, in dem die Bolzen 5A befestigt sind. Die Führung der Rastierhebel 1 wird von den Planflächen 42 dieser Lageraugen sowie von auf die Bolzen 5, 5A aufgeschobenen Hülsen 51 bewirkt, die sich direkt oder, wie dargestellt, über die Köpfe der Bolzen nach der Montage des Schaltgehäuses 4 an dem Getriebegehäuse 9 abstützen. Die Federn 6 sind zwischen dem Schaltgehäuse 4 und den Rastierhebeln eingespannt, wobei diese noch eine Führung 13 oder Auflagefläche 14 für die Federn 6 aufweisen.

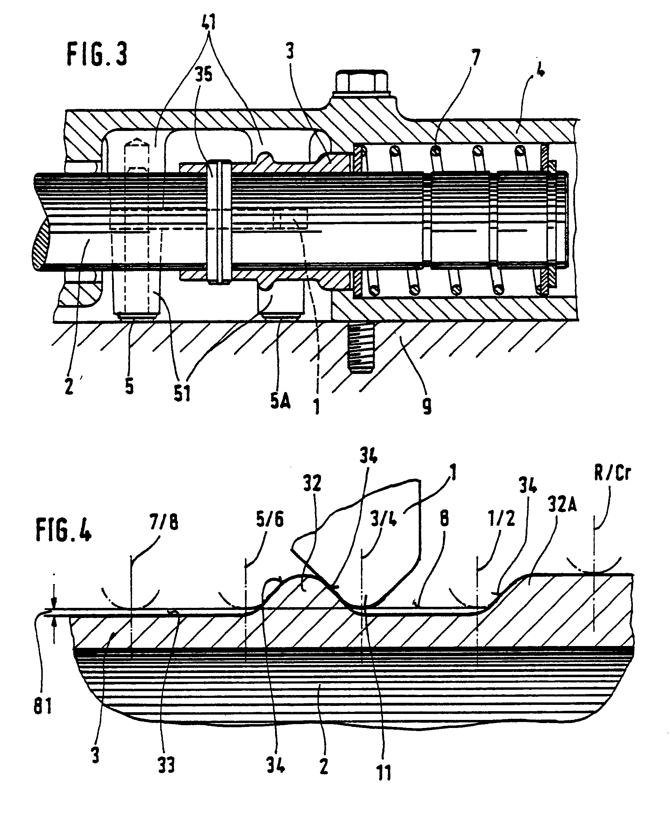

Ergänzend zu den beiden Fig. 1 und 2 zeigt Fig. 3 noch die Anordnung der Rastierhebel 1 mittig zur Drehwelle 2 mit dem quer dazu angeordneten Bolzen 5, 5A, die sich nach der Montage des Schaltgehäuses 4 an das Getriebegehäuse 9 an diesem abstützen sowie die an sich bekannte Anordnung der Fessel-Feder 7 zwischen Drehwelle 2 und Schaltgehäuse 4.

Aus Fig. 4 ist die Wirkungsweise ableitbar. Sie zeigt schematisch einen Ausschnitt eines auf einer Drehwelle 2 befestigten Rastenringes 3 mit der Darstellung der Gassen R/C, 1/2, 3/4, 5/6, 7/8, einer Doppel-H-Schaltung mit der Stellung der Nase 11 des Rastierhebels 1 in einigen Gassen. Die Nase 11 wird durch die Begrenzung der Schwenkbewegung des Rastierhebels 1 im Langloch 12 durch den Bolzen 5A (Fig. 1) so gefesselt, daß sich zwischen dem Bund der Rastenbahn 33 und der Nase in radialer Richtung ein Spalt 81 ergibt und die Anlage an der Raste 32, 32A nur an den Wirkflächen 34 erfolgt. Das Fessel-Feder-Paket ist so eingerichtet und angeordnet, daß die axiale Wirkrichtung sich bei der Stellung der Nase 11 auf der Mitte der Raste 32 in axialer Richtung umkehrt, so daß in der Neutralstellung des Schalthebels dieser und damit die Drehwelle im untersetzten Bereich — Gassen R/C, 1/2, 3/4 ohne Wählkraft in der Gasse 3/4 verbleibt oder auf diese zurückbewegt wird, während im direkten Bereich — Gruppengetriebe 1 : 1 — der Verbleib in der Gasse 5/6 oder die Zurückführung von der Gasse 7/8 auf diese Gasse erfolgt. Beim Wählen und Schalten der Gassen und Gänge von 3/4 nach 1/2 und 5/6 nach 7/8 und umgekehrt, wirken keine Rastkräfte — Feder 6 — und auch keine Reibung, sondern nur die axial wirkenden Kräfte des Fessel-Feder-Paketes.

Rastkräfte aus der Feder 6 sind nur bei der Verschiebung der Drehwelle 2 von der Gasse 3/4 nach der Gasse 5/6 und umgekehrt sowie bei Verstellung von der Gasse 1/2 in die R/C-Gasse wirksam. Die gefesselte Schwenkstellung des Rastierhebels 1 radial innen erfolgt bei einer Vorspannung der Feder 6.

Die Rasten 32, 32A können auch an — vorstehend — und in — eingearbeitet — der Drehwelle 2 angeordnet, also mit dieser einteilig sein.

Bezugszeichen

1 Rastierelement — Rastierhebel
11 Nase
12 Aussparung — Langloch
13 Führung
14 Auflagefläche
2 Drehwelle
3, 30 Rastenring
31 Rastenbahn
32, 32A Rasten
33 Grund der Rastenbahn
34 Wirkflächen
35 Spannbolzen
36 Seeger-Ring
4 Schaltgehäuse
41 Lagerauge
42 Planfläche
5, 5A Bolzen
51 Hülse
6 Feder
7 Fessel-Federpaket
8 Radial innere Endstellung
81 Spalt
9 Getriebegehäuse

Patentansprüche

1. Wählrastierung in einer Gangschalteinrichtung an oder in Verbindung mit einer Drehwelle (2), bei deren axialen Verschiebung in der Neutralstellung eine Gasse gewählt und bei deren Verdrehung die Gänge geschaltet werden, wobei auf der Drehwelle Rastenbahnen (31, 33) und Rasten (32, 32A) angeordnet sind, die nur in der Wählrichtung ein Rastengebirge ergeben, mit im Schaltgehäuse (4) geführten, mindestens einem Rastierelement (1), das unter der Wirkung einer Feder (6) in Richtung auf das Rastengebirge (Rastenbahn 31, 33 ; Rasten 32, 32A) zu gedrückt wird und dem Fahrer beim Verstellen des Schalthebels das Finden der Gassen erleichtert, wobei unter der zusätzlichen Wirkung eines Fessel-Federpaketes (7) der Schalthebel in vorbestimmte Gassen zurückgeführt wird, dadurch gekennzeichnet, daß das Rastierelement (1) um eine quer zur Drehwelle (2) angeordnete Achse (Bolzen 5) mit Richtung auf die Achse der Drehwelle (2) schwenkbar am Schaltgehäuse (4) gelagert und an diesem Gehäuse (4) ein Anschlag (Bolzen 5 A) angeordnet ist, der diese Schwenkbewegung in einer radial inneren Endstellung (8) begrenzt, so daß zwischen dem Rastierelement (1) und der Rastenbahn (31, 33) sich ein Spalt (81) ergibt.

2. Wählrastierung nach Anspruch 1, dadurch gekennzeichnet, daß das Rastierelement ein Rastierhebel (1) mit einer mit den Rasten (32, 32A) zusammenwirkenden Nase (11) ist, eine in radialer Richtung zur Drehwelle (2) verlaufender Aussparung (12) hat, in der ein zweiter parallel zu einem ersten (5) angeordneten Bolzen (5 A) insbesondere die Kippbewegung des Rastierhebels (1) nach radial innen begrenzt und die Feder (6) etwa in der Ebene dieser Aussparung (12) zwischen einer Führung (13) am Rastierhebel (1) und dem Schaltgehäuse (4) angeordnet ist.

3. Wählrastierung nach Anspruch 2, dadurch gekennzeichnet, daß die Aussparung ein Langloch (12) ist.

4. Wählrastierung nach den Ansprüchen 2 oder 3, dadurch gekennzeichnet, daß der erste für die drehbare Lagerung des Rastierhebels (1) angeordnete Bolzen (5) in einem nach innen gerichteten Lagerauge (41) am Schaltgehäuse (4) befestigt ist, daß die Planfläche (42) dieses Lagerauges (41) den Rastierhebel (1) nach der einen Seite und eine auf diesen ersten Bolzen (5) aufgeschobene Hülse (51) in Verbindung mit dem Anschlag dieser Hülse und/oder des Bolzens (5) am Getriebegehäuse (9) nach der anderen Seite in seiner Lage zur Drehwelle (2) festhält.

5. Wählrastierung nach einem der vorgenannten Ansprüche, dadurch gekennzeichnet, daß die Rastenbahn (31, 33) und die Rasten (32, 32A) auf einem auf die Drehwelle (2) aufgeschobenen und auf dieser befestigten Rastenring (3, 30) angeordnet ist und daß zwei gegenüberliegende Rastierhebel (1) angeordnet sind.

6. Wählrastierung nach Anspruch 5, dadurch gekennzeichnet, daß die Rasten (32, 32A) des Rastenringes (3) Wirkflächen (34) in beiden axialen Richtungen aufweisen, die durch ihre Gestaltung in Verbindung mit der Gestaltung der Nase (11) des Rastierhebels (1) zu gleichen, aber auch unterschiedlichen Rastierwirkungen führen.

7. Wählrastierung nach einem der vorgenannten Ansprüche 5 oder 6, dadurch gekennzeichnet, daß der Rastenring (3) über einen Spannbolzen (35) auf der Drehwelle (2) befestigt ist und als Abstützung für das zwischen der Drehwelle (2) und dem Schaltgehäuse (4) angeordnete Fessel-Federpaket (7) dient.

8. Wählrastierung nach Anspruch 7, dadurch gekennzeichnet, daß der Rastenring (3) bei der Änderung des Wählbildes — von R-Gang links auf R-Gang rechts — um 180° verdreht montiert wird.

9. Wählrastierung nach einem der Ansprüche 2 bis 6, dadurch gekennzeichnet, daß der Rastenring (30) nur in der Breite der Rasten (32, 32A) ausgeführt ist und axial über Anschläge und/oder Seeger-Ringe (36) gehalten wird.

10. Wählrastierung nach einem der Ansprüche 1 bis 6, dadurch gekennzeichnet, daß die Rasten (32, 32A) an oder in der Drehwelle (2) angeordnet und mit dieser einteilig ausgebildet sind.

**Claims**

1. A gear position locator in a gear change mechanism on or in combination with a rotary shaft (2) by shifting which axially in the neutral position a gate is selected and by twisting which the gears are changed, in which on the rotary shaft catchways (31, 33) and catches (32, 32A) are arranged, which result in a catch chain only in the direction for selection, having at least one locator element (1) which is guided in the selector casing (4) and under the action of a spring (6) is pressed in the direction towards the catch chain (catchway 31, 33 ; catches 32, 32A) and upon the driver shifting the gear lever facilitates the finding of the gate, and where under the additional action of a restraining spring pack (7) the gear lever is returned to predetermined gates, characterized in that the locator element (1) is supported on the selector casing (4) to be able to pivot in the direction toward ; the axis of the rotary shaft (2), about an axis (pin 5) arranged transversely to the rotary shaft (2), and a stop (pin 5A) is arranged on the said casing (4), which limits this pivoting motion in a radially inner end position (8) so that between the locator element (1) and the catchway (31, 33) a gap (81) results.

2. A gear position locator as in Claim 1, characterized in that the locator element is a locator lever (1) having a nose (11) for cooperating with the catches (32, 32A) and has, running in the direction radial to the rotary shaft (2), a cutout (12) in which a second pin (5A) arranged in parallel with a first pin (5) limits radially inwards in particular the tilting motion of the locator lever (1) and the spring (6) is arranged approximately in the plane of this cutout (12) between a guide (13) on the locator lever (1) and the selector casing (4).

3. A gear position locator as in Claim 2, characterized in that the cutout is an oblong hole (12).

4. A gear position locator as in Claims 2 or 3, characterized in that the first pin (5) arranged for the rotary bearing of the locator lever (1) is fastened to the selector casing (4) into an inwards-directed bearing eye (41), that the endface (42) of this bearing eye (41) secures the locator lever (1) towards the one side and a sleeve (51) pushed onto this first pin (5) in combination with the stop of this sleeve and/or the pin (5) against the gear casing (9) secures it towards the other side in its position with respect to the rotary shaft (2).

5. A gear position locator as in one of the preceding Claims, characterized in that the catchway (31, 33) and the catches (32, 32A) are arranged on a locator ring (3, 30) pushed onto the rotary shaft (2) and fastened to it and that two locator levers (1) are arranged lying opposite one another.

6. A gear position locator as in Claim 5, characterized in that the catches (32, 32A) on the locator ring (3) exhibit working faces (34) in both axial directions, which through their shape in combination with the shape of the nose (11) on the locator lever (1) lead to the same but also different locating actions.

7. A gear position locator as in one of the preceding Claims 5 or 6, characterized in that the locator ring (3) is fastened to the rotary shaft (2) by a clamp bolt (35) and serves as a bearing for the restraining spring pack (7) arranged between the rotary shaft (2) and the selector casing (4).

8. A gear position locator as in Claim 7, characterized in that the locator ring (3) upon alteration of the gate pattern — from lefthand reverse gear to righthand reverse gear — is mounted twisted through 180°.

9. A gear position locator as in one of the Claims 2 to 6, characterized in that the locator ring (30) is realized only in the width of the catches (32, 32A) and is held axially by stops and/or circlips (36).

10. A gear position locator as in one of the Claims 1 to 6, characterized in that the catches (32, 32A) are arranged on or in the rotary shaft (2) and are made in one piece with it.

## Revendications

1. Dispositif de crans de sélection dans un mécanisme de commande de vitesses, sur ou en liaison avec un arbre pivotant (2) dont le coulissement axial en position neutre sélectionne un couloir et dont le pivotement commande l'enclenchement des vitesses, cet arbre étant pourvu de crans proéminents (32, 32A) et de zones intermédiaires (31, 33) entre les crans, qui forment un relief d'arrêt uniquement dans la direction de sélection, le dispositif comportant au moins un élément d'arrêt (1) qui est poussé en direction du relief d'arrêt (zones intermédiaires 31, 33 ; crans 32, 32A) par l'effet d'un ressort (6) en étant guidé dans le carter de commande de vitesses (4) et qui aide le conducteur à trouver les couloirs quand il manoeuvre le levier de commande, ce levier lui-même étant en outre rappelé dans des couloirs prédéterminés sous l'effet d'un groupe de ressorts de calage (7), caractérisé en ce que l'élément d'arrêt (1) est monté sur le carter de commande de vitesses (4) de manière à pouvoir basculer en direction de l'axe de l'arbre pivotant (2) sur un axe (goujon 5) disposé transversalement par rapport à l'arbre pivotant (2), et en ce qu'une butée (goujon 5A) est montée sur ce carter (4) de façon à limiter ledit basculement à une position extrême (8), en direction radiale intérieure, dans laquelle il reste un intervalle (81) entre l'élément d'arrêt (1) et la zone intermédiaire (31, 33).

2. Dispositif selon la revendication 1, caractérisé en ce que l'élément d'arrêt est un levier d'arrêt (1) pourvu d'un nez (11) coopérant avec les crans (32, 32A), et comporte une fenêtre (12) qui s'étend radialement par rapport à l'arbre pivotant (2) et dans laquelle un second goujon (5A), disposé parallèlement à un premier goujon (5), limite radialement vers l'intérieur le basculement du levier d'arrêt (1), et en ce que ledit ressort (6) est disposé sensiblement dans le plan de cette fenêtre (12) entre ledit carter (4) et un guide (13) prévu sur le levier d'arrêt (1).

3. Dispositif selon la revendication 2, caractérisé en ce que ladite fenêtre est un trou oblong (12).

4. Dispositif selon la revendication 2 ou 3, caractérisé en ce que le premier goujon (5), formant le pivot de basculement du levier d'arrêt (1), est fixé dans un bossage (41) du carter de commande de vitesses (4), ce bossage étant dirigé vers l'intérieur, et en ce que le levier d'arrêt (1) est maintenu en situation par rapport à l'arbre pivotant (2), d'un premier côté par la surface frontale (42) dudit bossage (41) et de l'autre côté par une douille (51) emboîtée sur le premier goujon (5), par butée de cette douille et/ou de ce goujon (5) contre le carter (9) de la boîte de vitesses.

5. Dispositif selon l'une des revendications précédentes, caractérisé en ce que les crans (32, 32A) et les zones intermédiaires (31, 33) sont ménagés sur une bague crantée (3, 30), emboîtée sur l'arbre pivotant (2) et fixée à celui-ci, et en ce qu'il comporte deux leviers d'arrêt (1) opposés l'un à l'autre.

6. Dispositif selon la revendication 5, caractérisé en ce que les crans (32, 32A) de la bague crantée (3) comportent des surfaces d'appui (34) dans les deux sens axiaux, ces surfaces étant conformées pour créer, en combinaison avec la conformation du nez (11) du levier d'arrêt (1), des effets de crans pouvant être égaux, mais aussi différents.

7. Dispositif selon l'une des revendications 5 ou 6, caractérisé en ce que la bague d'arrêt (3) est fixée sur l'arbre pivotant (2) au moyen d'un boulon fendu (35) et sert d'appui pour le groupe de ressorts de calage (7) placé entre l'arbre pivotant (2) et le carter de commande de vitesses (4).

8. Dispositif selon la revendication 7, caractérisé en ce que la bague crantée (3) est montée en étant retournée de 180° en cas de changement du schéma de sélection de la marche arrière à gauche à la marche arrière à droite.

9. Dispositif selon l'une des revendications 2 à 6, caractérisé en ce que la bague crantée (30) ne s'étend que sur la largeur des crans (32, 32A) et est maintenue axialement par des butées et/ou des anneaux de type Seeger (36).

10. Dispositif selon l'une des revendications 1 à 6, caractérisé en ce que les crans (32, 32A) sont ménagés sur ou dans l'arbre pivotant (2) et sont faits d'une seule pièce avec lui.

FIG.1

FIG.2

FIG.3

FIG.4